(19) Europäisches Patentamt
European Patent Office
Office européen des brevets

(11) **EP 4 030 047 A1**

(12) **EUROPEAN PATENT APPLICATION**

(43) Date of publication:
**20.07.2022   Bulletin 2022/29**

(21) Application number: **22151822.8**

(22) Date of filing: **17.01.2022**

(51) International Patent Classification (IPC):
**F02K 9/58** (2006.01)

(52) Cooperative Patent Classification (CPC):
**F02K 9/58;** G05B 2219/45005; G05B 2219/45006

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **18.01.2021   CN 202110059391**

(71) Applicants:
• **Beijing Interstellar Glory Space Technology Co., Ltd.**
  **Beijing 100032 (CN)**
• **Beijing Interstellar Glory Technology LLC**
  **Beijing 100176 (CN)**

(72) Inventors:
• **PENG, Xiaobo**
  **Beijing, 100032 (CN)**
• **Hao, Kuo**
  **Beijing, 100032 (CN)**
• **Yan, Qing**
  **Beijing, 100032 (CN)**
• **Qi, Guangping**
  **Beijing, 100032 (CN)**
• **Zhao, Yeni**
  **Beijing, 100032 (CN)**
• **Chen, Shuguang**
  **Beijing, 100032 (CN)**

(74) Representative: **Schwarz & Partner Patentanwälte GmbH**
  **Patentanwälte**
  **Wipplingerstraße 30**
  **1010 Wien (AT)**

(54) **THRUST ADJUSTING METHOD AND APPARATUS FOR LIQUID-PROPELLANT ROCKET ENGINE, DEVICE, AND STORAGE MEDIUM**

(57)     The present invention discloses a thrust adjusting method and apparatus for a liquid-propellant rocket engine, a device, and a storage medium. The thrust adjusting method for a liquid-propellant rocket engine comprises: acquiring a current thrust and a target thrust of a liquid-propellant rocket, respectively; obtaining a first compensation value of an oxygen regulating valve and a second compensation value of a fuel regulating valve based on the current thrust and the target thrust, by using active disturbance rejection control technology; and compensating a valve opening of the oxygen regulating valve by using the oxygen valve compensation value, and compensating a valve opening of the fuel regulating valve by using the fuel valve compensation value, thereby controlling the regulating valves to operate, thus achieving a constantly variable thrust of the engine while ensuring the safety of the engine.

S101 Acquiring a current thrust and a target thrust of a liquid-propellant rocket, respectively

S1021 Building a first linearized model using the current thrust and the target thrust

S1022 Constructing a first second-order extended state observer by using the first linearized model, and determining a first instantaneous compensation value and a second instantaneous compensation value of the first second-order extended state observer

S1023 Compensating the first linearized model with the first instantaneous compensation value to obtain a first compensation value, which is the oxygen valve compensation value, and compensating the first linearized model with the second instantaneous compensation value to obtain a second compensation value, which is the fuel valve compensation value

S103 Compensating the valve opening of the oxygen regulating valve by using the oxygen valve compensation value, and compensating the valve opening of the fuel regulating valve by using the fuel valve compensation value

FIG. 1

EP 4 030 047 A1

**Description**

**Technical Field**

The present invention relates to the technical field of rockets, and in particular, to a thrust adjusting method and apparatus for a liquid-propellant rocket engine, a device, and a storage medium.

**Background**

A liquid-propellant rocket engine is a key technology to achieve the reuse of a rocket. A general liquid-propellant rocket engine has only one thrust condition after ignition, and the only way to change a thrust is to shut down the engine, which causes the thrust to rapidly drop from 100% to 0%. A rocket using such an engine cannot be reused. Because after an upper stage, the rocket needs to go through the stages of turnaround, re-entry into the atmospheric layer, deceleration, landing, etc., as the mass of a rocket body and a flight condition change, the engine needs different thrust magnitudes that change in real time, at different stages, to achieve corresponding tasks.

**Summary**

In view of this, embodiments of the present invention provide a thrust adjusting method and apparatus for a liquid-propellant rocket engine, a device, and a storage medium to achieve precise control of a thrust of a liquid-propellant rocket engine.

According to a first aspect, an embodiment of the present invention provides a thrust adjusting method for a liquid-propellant rocket engine, including:

acquiring a current operational parameter of a liquid-propellant rocket, wherein the current operational parameter includes at least a thrust;
acquiring a target operational parameter corresponding to the current operational parameter;
obtaining an oxygen valve compensation value and a fuel valve compensation value based on the current operational parameter and the target operational parameter, by using active disturbance rejection control technology; and
compensating a valve opening of an oxygen regulating valve by using the oxygen valve compensation value, and compensating a valve opening of a fuel regulating valve by using the fuel valve compensation value.

According to the thrust adjusting method for a liquid-propellant rocket engine provided in the embodiment of the present invention, an oxygen valve compensation value and a fuel valve compensation value can be obtained based on the current thrust and the target thrust, by using active disturbance rejection control technology, and a valve opening of an oxygen regulating valve is compensated by using the oxygen valve compensation value, and a valve opening of a fuel regulating valve is compensated by using the fuel valve compensation value, thereby achieving precise control of the thrust of the liquid-propellant rocket engine during working of the liquid-propellant rocket engine and achieving a constantly variable thrust of the engine.

In conjunction with the first aspect, in a first implementation of the first aspect, in the case where the current operational parameter is a thrust, obtaining an oxygen valve compensation value and a fuel valve compensation value based on the current operational parameter and the target operational parameter, by using active disturbance rejection control technology includes:

building a first linearized model using a current thrust and a target thrust;
constructing a first second-order extended state observer by using the first linearized model, and determining a first instantaneous compensation value and a second instantaneous compensation value of the first second-order extended state observer; and
compensating the first linearized model with the first instantaneous compensation value to obtain a first compensation value, which is the oxygen valve compensation value, and compensating the first linearized model with the second instantaneous compensation value to obtain a second compensation value, which is the fuel valve compensation value.

In conjunction with the first aspect, in a second implementation of the first aspect, in the case where the current operational parameter is a thrust and a mixing ratio, obtaining an oxygen valve compensation value and a fuel valve compensation value based on the current operational parameter and the target operational parameter, by using active disturbance rejection control technology includes:

building a first linearized model using a current thrust and a target thrust;

constructing a first second-order extended state observer by using the first linearized model, and determining a first instantaneous compensation value and a second instantaneous compensation value of the first second-order extended state observer; and

compensating the first linearized model with the first instantaneous compensation value to obtain a first compensation value, and compensating the first linearized model with the second instantaneous compensation value to obtain a second compensation value;

building a second linearized model using a current mixing ratio and a target mixing ratio;

constructing a second second-order extended state observer by using the second linearized model, and determining a third instantaneous compensation value and a fourth instantaneous compensation value of the second second-order extended state observer;

compensating the second linearized model with the third instantaneous compensation value to obtain a third compensation value, and compensating the second linearized model with the fourth instantaneous compensation value to obtain a fourth compensation value; and

calculating the oxygen valve compensation value according to the first compensation value and the third compensation value; and calculating the fuel valve compensation value according to the second compensation value and the fourth compensation value.

In conjunction with the first implementation of the first aspect or the second implementation of the first aspect, in a third implementation of the first aspect, the first linearized model is

$$\Delta \dot{r} = a_1 \Delta r + a_2 \Delta \delta_o + a_3 \Delta \delta_f + a_4 \Delta \dot{m}_{o2} + a_5 \Delta \dot{m}_{f2}$$

, where $\Delta r$ represents a thrust difference, i.e., the target thrust minus the current thrust; $\Delta \dot{r}$ represents a change rate of the thrust difference; $\Delta \delta_O$ represents the oxygen regulating valve opening; $\Delta \delta_f$ represents the fuel regulating valve opening; $\Delta \dot{m}_{o2}$ represents an oxygen flow rate; $\Delta \dot{m}_{f2}$ represents a fuel flow rate; and $a_1$, $a_2$, $a_3$, $a_4$, and $a_5$ represent model parameters obtained by small disturbance linearization of an engine model.

In conjunction with the third implementation of the first aspect, in a fourth implementation of the first aspect, the first second-order extended state observer is:

$$\begin{cases} e_o = z_{1o} - \frac{1}{2}\Delta r \\ \dot{z}_{1o} = z_{2o} - \beta_{1o}e_o + \bar{a}_{2o}\Delta \delta_o \\ \dot{z}_{2o} = -\beta_{2o}e_o \end{cases} \qquad \begin{cases} e_f = z_{1f} - \frac{1}{2}\Delta r \\ \dot{z}_{1f} = z_{2f} - \beta_{1j}e_f + \bar{a}_{3f}\Delta \delta_f \\ \dot{z}_{2f} = -\beta_{2f}e_f \end{cases}$$

where $e_o$ represents a first tracking error of the first second-order extended state observer; $Z_{1o}$ represents a first state variable in the first second-order extended state observer; $Z_{2o}$ represents a second state variable in the first second-order extended state observer; $\beta_{1o}$ represents a first control parameter in the first second-order extended state observer; $\beta_{2o}$ represents a second control parameter in the first second-order extended state observer; $\bar{a}_{2o}$ represents an estimated value of an equivalent area coefficient of the oxygen regulating valve; ef represents a second tracking error of the first second-order extended state observer; $Z_{1f}$ represents a third state variable in the first second-order extended state observer; $Z_{2f}$ represents a fourth state variable in the first second-order extended state observer; $\beta_{1f}$ represents a third control parameter in the first second-order extended state observer; $\beta_{2f}$ represents a fourth control parameter in the first second-order extended state observer; and $\bar{a}_{3f}$ represents an estimated value of an equivalent area coefficient of the fuel regulating valve.

In conjunction with the fourth implementation of the first aspect, in a fifth implementation of the first aspect, determining a first instantaneous compensation value and a second instantaneous compensation value of the first second-order extended state observer includes:

setting the control parameters of the first second-order extended state observer as follows:

$$\begin{cases} \beta_{1o} = 2\omega_o \\ \beta_{2o} = {\omega_o}^2 \end{cases} \quad \begin{cases} \beta_{1f} = 2\omega_f \\ \beta_{2f} = {\omega_f}^2 \end{cases}$$

wherein $\omega_o$ represents a fifth control parameter in the first second-order extended state observer; and $\omega_f$ represents a sixth control parameter in the first second-order extended state observer; and setting a characteristic equation of the first second-order extended state observer $(s + \omega)^2$ to be , and designing a required co according to a control loop bandwidth such that $Z_{2o}$ and $Z_{2f}$ converge to all quantities except actuator inputs to obtain the first instantaneous compensation value and the second instantaneous compensation value of the first second-order extended state observer.

In conjunction with the second implementation of the first aspect, in a sixth implementation of the first aspect, calculating the oxygen valve compensation value according to the first compensation value and the third compensation value includes: adding the first compensation value and the third compensation value to obtain the oxygen valve compensation value; and calculating the fuel valve compensation value according to the second compensation value and the fourth compensation value includes: adding the second compensation value and the fourth compensation value to obtain the fuel valve compensation value.

According to a second aspect, an embodiment of the present invention provides a thrust adjusting apparatus for a liquid-propellant rocket engine, including:

a first acquisition module configured to acquire a current operational parameter of a liquid-propellant rocket, wherein the current operational parameter includes at least a thrust;
a second acquisition module configured to acquire a target operational parameter corresponding to the current operational parameter;
a regulation module configured to obtain an oxygen valve compensation value and a fuel valve compensation value based on the current operational parameter and the target operational parameter, by using active disturbance rejection control technology; and
a compensation module configured to compensate a valve opening of an oxygen regulating valve by using the oxygen valve compensation value, and compensate a valve opening of a fuel regulating valve by using the fuel valve compensation value.

According to a third aspect, an embodiment of the present invention provides an electronic device, including a memory and a processor, wherein the memory and the processor are communicatively connected to each other, and the memory stores computer instructions, which are executed by the processor to perform the thrust adjusting method for a liquid-propellant rocket engine in the first aspect or in any implementation of the first aspect.

According to a fourth aspect, an embodiment of the present invention provides a computer-readable storage medium, which stores computer instructions configured to cause a computer to perform the thrust adjusting method for a liquid-propellant rocket engine in the first aspect or in any implementation of the first aspect.

**Brief Description of the Drawings**

Features and advantages of the present invention will be understood more clearly with reference to the accompanying drawings, which are illustrative and should not be construed as limiting the present invention. In the drawings:

FIG. 1 is a flow diagram of a thrust adjusting method for a liquid-propellant rocket engine in Embodiment 1 of the present invention;
FIG. 2 is a flow diagram of a thrust adjusting method for a liquid-propellant rocket engine in Embodiment 2 of the present invention;
FIG. 3 is a principle diagram of the thrust adjusting method for a liquid-propellant rocket engine in Embodiment 2 of the present invention; and
FIG. 4 is a structural diagram of a thrust adjusting apparatus for a liquid-propellant rocket engine in Embodiment 3 of the present invention.

**Detailed Description of Embodiments**

To make the objects, technical solutions and advantages of the embodiments of the present invention clearer, the technical solutions in the embodiments of the present invention will be described below clearly and completely in conjunction with the accompanying drawings in the embodiments of the present invention. Obviously, the described embodiments are only a part of the embodiments of the present invention, and not all the embodiments. All other embodiments obtained by those skilled in the art based on the embodiments in the present invention without creative work fall into the protection scope of the present invention.

In description of the present invention, it is to be noted that orientation or location relations denoted by the terms "center", "upper", "lower", "left", "right", "vertical", "horizontal", "inner", "outer", etc. are orientation or location relations based on illustration in the drawings, are only intended to facilitate describing the present invention and simplify description, instead of indicating or implying the denoted devices or elements must have specific orientations and are constructed and operated in specific orientations, and thus they cannot be construed as limiting the present invention. In addition, the terms "first", "second", "third", etc. are only used for description and should not be construed as indicating or implying relative importance.

Embodiment 1

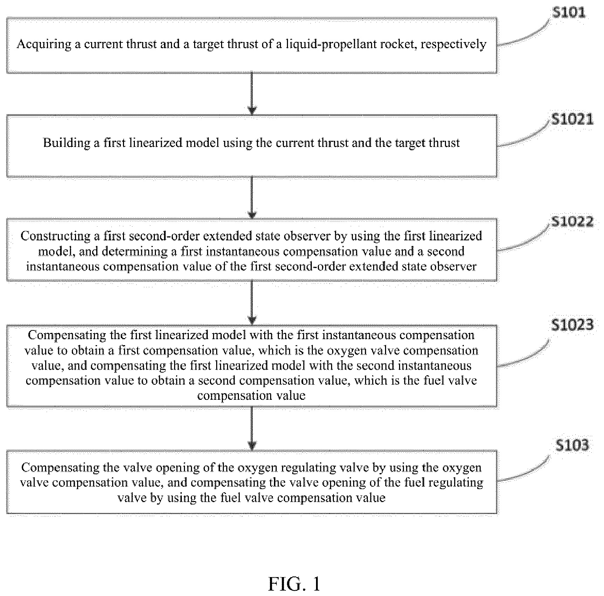

Embodiment 1 of the present invention provides a thrust adjusting method for a liquid-propellant rocket engine. FIG. 1 is a flow diagram of the thrust adjusting method for a liquid-propellant rocket engine in Embodiment 1 of the present invention. As shown in FIG. 1, the thrust adjusting method for a liquid-propellant rocket engine in Embodiment 1 of the present invention includes the following steps:

S101: acquiring a current thrust and a target thrust of a liquid-propellant rocket, respectively.

In the embodiment of the present invention, data is collected by a large number of sensors on the engine, and signals are filtered by a filter, and then information fusion and data resolving are performed on a large amount of data to obtain the current thrust of the engine. The target thrust of the liquid-propellant rocket may be obtained by a guidance system of the rocket according to accelerations required specifically for different flight scenarios.

S102: obtaining an oxygen valve compensation value and a fuel valve compensation value based on the current thrust and the target thrust, by using active disturbance rejection control technology.

In this embodiment of the present invention, a first compensation value of an oxygen regulating valve and a second compensation value of a fuel regulating valve are obtained based on the active disturbance rejection control technology. The most prominent feature of the active disturbance rejection control technology is that all uncertain factors acting on a controlled object are attributed to unknown disturbances, which are estimated by using input and output data of the object and compensated directly. Due to the real-time nature of unknown disturbance compensation, active disturbance rejection control is quite robust. When the controlled object is in a constantly changing environment, real-time disturbance compensation ensures the active disturbance rejection control is less affected by the environment.

The active disturbance rejection control technology mainly includes transition process design, nonlinear state feedback, and extended state observer technology, and various forms of active disturbance rejection controllers can be obtained by combining the above-mentioned three technology modules. The core is the extended state observer, which is briefly introduced below.

A negative feedback in a control system has some suppression effect on disturbances, but cannot completely eliminate their influences. In terms of control purpose, if a disturbance does not affect an output of the system (i.e., unobservable), it does not need to consider eliminating its influence during control, but a disturbance that can affect the controlled output needs to be eliminated. When a disturbance can affect the controlled output, its effect should be reflected in controlled output information, making it possible to estimate its effect in an appropriate way from the output information. This is the idea of observation compensation, by which disturbances that can affect the controlled output are extended into new state variables, and the new state variables are observed by using a special feedback mechanism, which is the basic idea of an extended state observer (ES0).

As a specific implementation, the active disturbance rejection control technology in the embodiment of the invention is implemented by using a control algorithm of an extended state observer and PID (proportional-integral-derivative control).

Specifically, obtaining an oxygen valve compensation value and a fuel valve compensation value based on the current thrust and the target thrust, by using active disturbance rejection control technology technology may be implemented by the following technical solution:

S1021: building a first linearized model using the current thrust and the target thrust.
S1022: constructing a first second-order extended state observer by using the first linearized model, and determining a first instantaneous compensation value and a second instantaneous compensation value of the first second-order extended state observer.
S1023: compensating the first linearized model with the first instantaneous compensation value to obtain a first compensation value, which is the oxygen valve compensation value, and compensating the first linearized model with the second instantaneous compensation value to obtain a second compensation value, which is the fuel valve compensation value.

More specifically, a thrust to valve opening relative order is known from an engine model to be a first order, a coefficient of which is a variable associated with valve opening. Exemplarily, in the above step S1021, the first linearized model built by using the current thrust and the target thrust is:

$$\Delta \dot{r} = a_1 \Delta r + a_2 \Delta \delta_o + a_3 \Delta \delta_f + a_4 \Delta \dot{m}_{o2} + a_5 \Delta \dot{m}_{f2}$$

where $\Delta r$ represents a thrust difference, i.e., the target thrust minus the current thrust; $\Delta \dot{r}$ represents a change rate of the thrust difference; $\Delta \delta_O$ represents an oxygen regulating valve opening; $\Delta \delta_f$ represents a fuel regulating valve opening; $\Delta \dot{m}_{o2}$ represents an oxygen flow rate; $\Delta \dot{m}_{f2}$ represents a fuel flow rate; and $a_1$, $a_2$, $a_3$, $a_4$, and $a_5$ represent model parameters obtained by small disturbance linearization of an engine model.

The engine thrust is obtained by joint control of a fuel regulating valve and an oxygen regulating valve. An instruction deviation is divided so that each of the two valves deals with half of the deviation and each calculates a control instruction, assuming that the other valve has a constant value during the calculation. A first second-order extended state observer is constructed for the above-mentioned control loop. Exemplarily, in the above step S1022, the constructed first second-order extended state observer is as shown below:

$$\begin{cases} e_o = z_{1o} - \frac{1}{2}\Delta r \\ \dot{z}_{1o} = z_{2o} - \beta_{1o}e_o + \bar{a}_{2o}\Delta\delta_o \\ \dot{z}_{2o} = -\beta_{2o}e_o \end{cases} \quad \begin{cases} e_f = z_{1f} - \frac{1}{2}\Delta r \\ \dot{z}_{1f} = z_{2f} - \beta_{1f}e_f + \bar{a}_{3f}\Delta\delta_f \\ \dot{z}_{2f} = -\beta_{2f}e_f \end{cases}$$

where $\Delta r$ represents a thrust difference; $e_o$ represents a first tracking error of the first second-order extended state observer; $Z_{1o}$ represents a first state variable in the first second-order extended state observer; $Z_{2o}$ represents a second state variable in the first second-order extended state observer; $\beta_{1o}$ represents a first control parameter in the first second-order extended state observer; $\beta_{2o}$ represents a second control parameter in the first second-order extended state observer; $\bar{a}_{2o}$ represents an estimated value of an equivalent area coefficient of the oxygen regulating valve; ef represents a second tracking error of the first second-order extended state observer; $Z_{1f}$ represents a third state variable in the first second-order extended state observer; $Z_{2f}$ represents a fourth state variable in the first second-order extended state observer; $\beta_{1f}$ represents a third control parameter in the first second-order extended state observer; $\beta_{2f}$ represents a fourth control parameter in the first second-order extended state observer; and $\bar{a}_{3f}$ represents an estimated value of an equivalent area coefficient of the fuel regulating valve.

In the embodiment of the present invention, in the above step S1022, determining a first instantaneous compensation value and a second instantaneous compensation value of the first second-order extended state observer may be implemented by the following technical solution:

the control parameters of the second-order extended state observer are set as follows:

$$\begin{cases} \beta_{1o} = 2\omega_o \\ \beta_{2o} = \omega_o{}^2 \end{cases} \quad \begin{cases} \beta_{1f} = 2\omega_f \\ \beta_{2f} = \omega_f{}^2 \end{cases}$$

wherein $\omega_o$ represents a fifth control parameter in the first second-order extended state observer; and $\omega_f$ represents a sixth control parameter in the first second-order extended state observer; and a characteristic equation of the second-order extended state observer is set to be $(s + \omega)^2$, and a required $\omega$ may be designed according to a control loop bandwidth to achieve a relatively good tracking effect of signals such that $Z_{2o}$ and $Z_{2f}$ converge to all quantities except actuator inputs to obtain the first instantaneous compensation value and the second instantaneous compensation value of the first second-order extended state observer.

In the above step S1023, compensating the first linearized model with the first instantaneous compensation value and the second instantaneous compensation value to obtain the first compensation value and the second compensation value may be implemented by the following solution:

After the first linearized model is compensated with $Z_2$ (including $Z_{2o}$ and $Z_{2f}$), the original system may be simplified to a purely integral series system as follows:

$$\Delta\dot{r} = \bar{a}_{2o}\Delta\delta_o \quad \Delta\dot{r} = \bar{a}_{3f}\Delta\delta_f$$

then controller design is performed on the system based on PID to obtain:

$$\Delta\delta_o = K_P\Delta r + K_I\int\Delta r + K_D\Delta\dot{r} \quad \Delta\delta_f = K_P\Delta r + K_I\int\Delta r + K_D\Delta\dot{r}$$

where $\Delta\delta_o$ represents the oxygen regulating valve opening; $\Delta\delta_f$ represents the fuel regulating valve opening; Kp represents a first control parameter in the PID; $K_I$ represents a second control parameter in the PID; and $K_D$ represents a third control parameter in the PID.

S103: compensating the valve opening of the oxygen regulating valve by using the oxygen valve compensation value, and compensating the valve opening of the fuel regulating valve by using the fuel valve compensation value.

According to the thrust adjusting method for a liquid-propellant rocket engine provided in the embodiment of the present invention, an oxygen valve compensation value and a fuel valve compensation value can be obtained based on the current thrust and the target thrust, by using active disturbance rejection control technology, and a valve opening of an oxygen regulating valve is compensated by using the oxygen valve compensation value, and a valve opening of a fuel regulating valve is compensated by using the fuel valve compensation value, thereby achieving precise control of the thrust of the liquid-propellant rocket engine during working of the liquid-propellant rocket engine and achieving a constantly variable thrust of the engine, such as achieving a constantly variable thrust of 50%-105%.

Embodiment 2

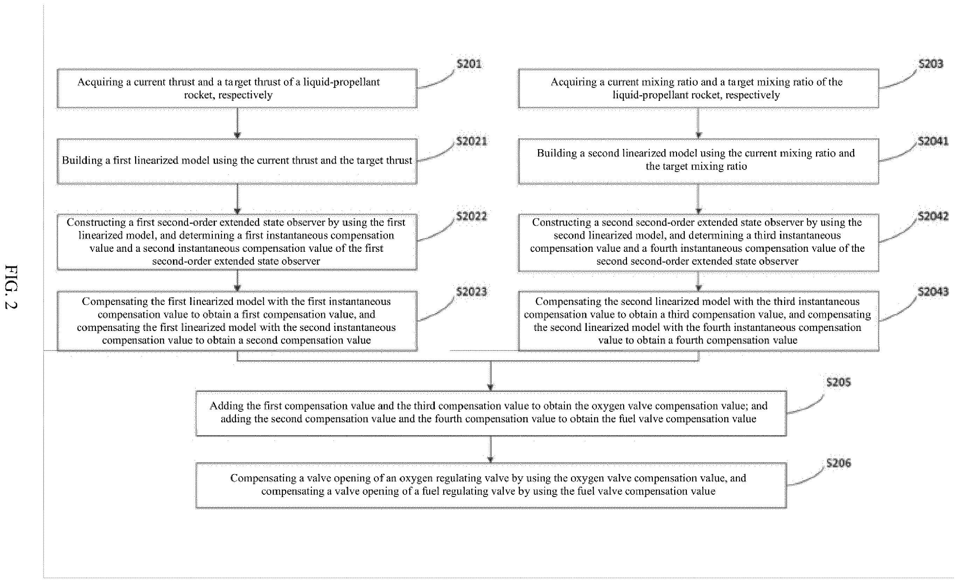

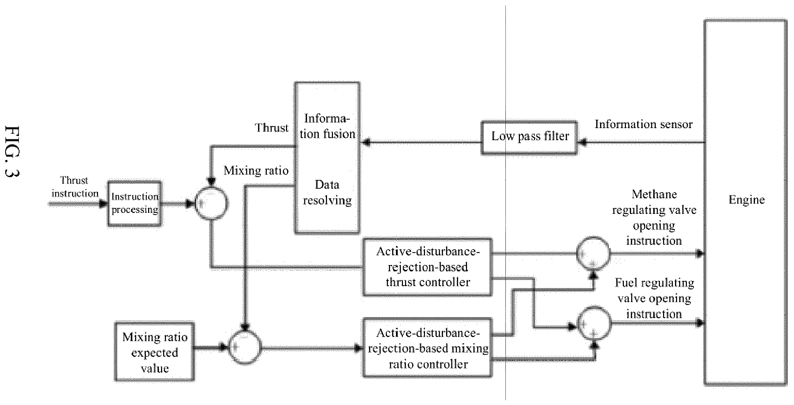

Embodiment 2 of the present invention provides a thrust adjusting method for a liquid-propellant rocket engine. FIG. 2 is a flow diagram of the thrust adjusting method for a liquid-propellant rocket engine in Embodiment 2 of the present invention, and FIG. 3 is a principle diagram of the thrust adjusting method for a liquid-propellant rocket engine in Embodiment 2 of the present invention. As shown in FIGs. 2 and 3, the thrust adjusting method for a liquid-propellant rocket engine in Embodiment 1 of the present invention includes the following steps:

S201: acquiring a current thrust and a target thrust of a liquid-propellant rocket, respectively.
S2021: building a first linearized model using the current thrust and the target thrust.
S2022: constructing a first second-order extended state observer by using the first linearized model, and determining a first instantaneous compensation value and a second instantaneous compensation value of the first second-order extended state observer; and
S2023: compensating the first linearized model with the first instantaneous compensation value to obtain a first compensation value, and compensating the first linearized model with the second instantaneous compensation value to obtain a second compensation value.
Specific details of steps S2021-S2023 of embodiment 2 of the present invention may be understood by referring to the description and effects corresponding to steps S1021-S1023 of Embodiment 1 of the present invention, which will not be repeated here.
S203: acquiring a current mixing ratio and a target mixing ratio of oxygen and a fuel of the liquid-propellant rocket, respectively.
In the embodiment of the present invention, data is collected by a large number of sensors on the engine, and signals are filtered by a filter, and then information fusion and data resolving are performed on a large amount of data to obtain the current mixing ratio of the engine. The target mixing ratio of the liquid-propellant rocket may be set.
S2041: building a second linearized model using the current mixing ratio and the target mixing ratio.
S2042: constructing a second second-order extended state observer by using the second linearized model, and determining a third instantaneous compensation value and a fourth instantaneous compensation value of the second second-order extended state observer.

S2043: compensating the second linearized model with the third instantaneous compensation value to obtain a third compensation value, and compensating the second linearized model with the fourth instantaneous compensation value to obtain a fourth compensation value.

Specific details of steps S2041-S2042 of Embodiment 2 of the present invention may be understood by referring to the description and effects corresponding to steps S1021-S1023 of Embodiment 1 of the present invention, which will not be repeated here.

S205: adding the first compensation value and the third compensation value to obtain the oxygen valve compensation value; and adding the second compensation value and the fourth compensation value to obtain the fuel valve compensation value.

S206: compensating a valve opening of an oxygen regulating valve by using the oxygen valve compensation value, and compensating a valve opening of a fuel regulating valve by using the fuel valve compensation value.

In Embodiment 2 of the present invention, a thrust adjusting control algorithm for a liquid-propellant rocket engine is designed based on active disturbance rejection control technology. The most prominent feature of the active disturbance rejection control technology is that all uncertain factors acting on a controlled object are attributed to unknown disturbances, which are estimated by using input and output data of the object and compensated directly. Due to the real-time nature of unknown disturbance compensation, active disturbance rejection control is quite robust. When the controlled object is in a constantly changing environment, real-time disturbance compensation ensures the active disturbance rejection control is less affected by the environment.

Embodiment 2 of the present invention has the following advantages:

1) it achieves precise control of the mixing ratio of the liquid-propellant rocket engine, and ensures the safety of the engine itself and the best combustion efficiency;

2) it achieves precise control of the thrust of the liquid-propellant rocket engine, and can achieve constantly variable thrust of 50%-105%; and

3) the design process of a thrust regulating controller is greatly simplified based on the active disturbance rejection control technology, and it meets the requirements of strong robustness and high adaptability of the controller.

In other words, the thrust adjusting method for a liquid-propellant rocket engine provided in Embodiment 2 of the present invention not only achieves precise control of the thrust of the liquid-propellant rocket engine and a constantly variable thrust of the engine, but also achieves precise control of the mixing ratio of the liquid-propellant rocket engine, and ensures the safety of the engine itself and the best combustion efficiency.

Embodiment 3

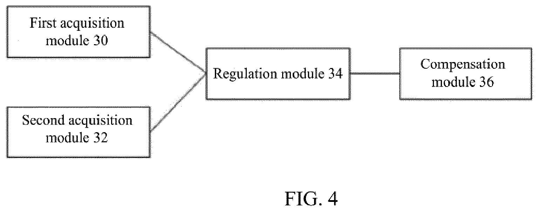

Embodiment 3 of the present invention provides a thrust adjusting apparatus for a liquid-propellant rocket engine. FIG. 4 is a structural diagram of a thrust adjusting apparatus for a liquid-propellant rocket engine in Embodiment 3 of the present invention. As shown in FIG. 4, the thrust adjusting apparatus for a liquid-propellant rocket engine in Embodiment 3 of the present invention includes a first acquisition module 30, a second acquisition module 32, a regulation module 34, and a compensation module 36.

Specifically, the first acquisition module 30 is configured to acquire a current operational parameter of a liquid-propellant rocket, wherein the current operational parameter includes at least a thrust;

the second acquisition module 32 is configured to acquire a target operational parameter corresponding to the current operational parameter;

the regulation module 34 is configured to obtain an oxygen valve compensation value and a fuel valve compensation value based on the current operational parameter and the target operational parameter, by using active disturbance rejection control technology; and

the compensation module 36 is configured to compensate a valve opening of an oxygen regulating valve by using the oxygen valve compensation value, and compensate a valve opening of a fuel regulating valve by using the fuel valve compensation value.

As a specific implementation, if the current operational parameter is a thrust, the regulation module 34 is specifically configured to: build a first linearized model using a current thrust and a target thrust; construct a first second-order extended state observer by using the first linearized model, and determine a first instantaneous compensation value and a second instantaneous compensation value of the first second-order extended state observer; and compensate the first linearized model with the first instantaneous compensation value to obtain a first compensation value, which is the oxygen valve compensation value, and compensate the first linearized model with the second instantaneous compensation value to obtain a second compensation value, which is the fuel valve compensation value.

As a specific embodiment, if the current operational parameter is a thrust and a mixing ratio, the regulation module 34 is specifically configured to: build a first linearized model using a current thrust and a target thrust; construct a first second-order extended state observer by using the first linearized model, and determine a first instantaneous compensation value and a second instantaneous compensation value of the first second-order extended state observer; compensate the first linearized model with the first instantaneous compensation value to obtain a first compensation value, and compensate the first linearized model with the second instantaneous compensation value to obtain a second compensation value; build a second linearized model using a current mixing ratio and a target mixing ratio; construct a second second-order extended state observer by using the second linearized model, and determine a third instantaneous compensation value and a fourth instantaneous compensation value of the second second-order extended state observer; compensate the second linearized model with the third instantaneous compensation value to obtain a third compensation value, and compensate the second linearized model with the fourth instantaneous compensation value to obtain a fourth compensation value; calculate the oxygen valve compensation value according to the first compensation value and the third compensation value; and calculate the fuel valve compensation value according to the second compensation value and the fourth compensation value.

Specific details of the above-mentioned thrust adjusting apparatus for a liquid-propellant rocket engine may be understood by correspondingly referring to the corresponding related description and effects in the embodiments shown in FIGs. 1 to 3, which will not be repeated here.

Embodiment 4

The embodiment of the present invention also provides an electronic device, which may include a processor and a memory, wherein the processor and the memory may be connected via a bus or by other means.

The processor may be a central processing unit (CPU). The processor may also be other general-purpose processor, a digital signal processor (DSP), an application specific integrated circuit (ASIC), a field-programmable gate array (FPGA), or other programmable logic device, a discrete gate or transistor logic device, a discrete hardware component or other chip, or a combination of the above-mentioned various types of chips.

The memory, as a non-transitory computer-readable storage medium, may be used to store non-transitory software programs, non-transitory computer executable programs and modules, such as program instructions/modules corresponding to the thrust adjusting method for a liquid-propellant rocket engine in embodiments of the present invention (such as the first acquisition module 30, the second acquisition module 32, the regulation module 34, and the compensation module 36 shown in Fig. 4). The processor runs the non-transitory software programs, instructions and modules stored in the memory to execute various function applications of the processor and data processing, i.e., implementing the thrust adjusting method for a liquid-propellant rocket engine in the above method embodiments.

The memory may include a program storage area and a data storage area, wherein the program storage area may store an operating system and an application program required for at least one function; and the data storage area may store data created by the processor, and the like. In addition, the memory may include a high-speed random access memory, and may also include a non-transitory memory, such as at least one magnetic disk storage device, flash memory device, or other non-transitory solid-state storage device. In some embodiments, the memory optionally includes memories remotely provided from the processor, and these remote memories may be connected to the processor through a network. Examples of the network described above include, but are not limited to, the Internet, an intranet, a local area network, a mobile communication network and combinations thereof.

The one or more modules are stored in the memory, and when executed by the processor, execute the thrust adjusting method for a liquid-propellant rocket engine in the embodiments as shown in FIGs. 1-3.

Specific details of the above-mentioned electronic device may be understood by correspondingly referring to the corresponding related description and effects in the embodiments shown in FIGs. 1 to 4, which will not be repeated here.

Those skilled in the art can understand that all or part of the processes in the methods in the above embodiments may be implemented by relevant hardware instructed by a computer program, and the program may be stored in a computer-readable storage medium. The program, when executed, may include the processes of the above method embodiments. The storage medium may be a magnetic disk, an optical disk, a read-only memory (ROM), a random access memory (RAM), a flash memory, a hard disk drive (HDD), a solid-state drive (SSD), or the like; and the storage medium may also include a combination of the aforementioned types of storage.

Although the embodiments of the present invention are described with reference to the accompanying drawings, those skilled in the art can make various modifications and variations without departing from the spirit and scope of the present invention, and such modifications and variations fall within the scope of the appended claims.

Claims

1. A thrust adjusting method for a liquid-propellant rocket engine, comprising:

    acquiring a current operational parameter of a liquid-propellant rocket, wherein the current operational parameter includes at least a thrust;
    acquiring a target operational parameter corresponding to the current operational parameter;
    obtaining an oxygen valve compensation value and a fuel valve compensation value based on the current operational parameter and the target operational parameter, by using active disturbance rejection control technology; and
    compensating a valve opening of an oxygen regulating valve by using the oxygen valve compensation value, and compensating a valve opening of a fuel regulating valve by using the fuel valve compensation value.

2. The method according to claim 1, wherein in the case where the current operational parameter is a thrust, obtaining an oxygen valve compensation value and a fuel valve compensation value based on the current operational parameter and the target operational parameter, by using active disturbance rejection control technology comprises:

    building a first linearized model using a current thrust and a target thrust;
    constructing a first second-order extended state observer by using the first linearized model, and determining a first instantaneous compensation value and a second instantaneous compensation value of the first second-order extended state observer; and
    compensating the first linearized model with the first instantaneous compensation value to obtain a first compensation value, which is the oxygen valve compensation value; and compensating the first linearized model with the second instantaneous compensation value to obtain a second compensation value, which is the fuel valve compensation value.

3. The method according to claim 1, wherein in the case where the current operational parameter is a thrust and a mixing ratio, obtaining an oxygen valve compensation value and a fuel valve compensation value based on the current operational parameter and the target operational parameter, by using active disturbance rejection control technology comprises:

    building a first linearized model using a current thrust and a target thrust;
    constructing a first second-order extended state observer by using the first linearized model, and determining a first instantaneous compensation value and a second instantaneous compensation value of the first second-order extended state observer; and
    compensating the first linearized model with the first instantaneous compensation value to obtain a first compensation value, and compensating the first linearized model with the second instantaneous compensation value to obtain a second compensation value;
    building a second linearized model using a current mixing ratio and a target mixing ratio;
    constructing a second second-order extended state observer by using the second linearized model, and determining a third instantaneous compensation value and a fourth instantaneous compensation value of the second second-order extended state observer;
    compensating the second linearized model with the third instantaneous compensation value to obtain a third compensation value, and compensating the second linearized model with the fourth instantaneous compensation value to obtain a fourth compensation value; and
    calculating the oxygen valve compensation value according to the first compensation value and the third compensation value; and calculating the fuel valve compensation value according to the second compensation value and the fourth compensation value.

4. The method according to claim 2 or 3, wherein the first linearized model is:

$$\Delta\dot{r} = a_1\Delta r + a_2\Delta\delta_o + a_3\Delta\delta_f + a_4\Delta\dot{m}_{o2} + a_5\Delta\dot{m}_{f2}$$

,

where $\Delta r$ represents a thrust difference, i.e., the target thrust minus the current thrust; $\Delta\dot{r}$ represents a change rate of the thrust difference; $\Delta\delta_O$ represents the oxygen regulating valve opening; $\Delta\delta_f$ represents the fuel regulating valve

opening; $\Delta\dot{m}_{o2}$ represents an oxygen flow rate; $\Delta\dot{m}_{f2}$ represents a fuel flow rate; and $a_1$, $a_2$, $a_3$, $a_4$, and $a_5$ represent model parameters obtained by small disturbance linearization of an engine model.

**5.** The method according to claim 4, wherein the first second-order extended state observer is:

$$\begin{cases} e_o = z_{1o} - \frac{1}{2}\Delta r \\ \dot{z}_{1o} = z_{2o} - \beta_{1o}e_o + \bar{a}_{2o}\Delta\delta_o \\ \dot{z}_{2o} = -\beta_{2o}e_o \end{cases} \qquad \begin{cases} e_f = z_{1f} - \frac{1}{2}\Delta r \\ \dot{z}_{1f} = z_{2f} - \beta_{1f}e_f + \bar{a}_{3f}\Delta\delta_f \\ \dot{z}_{2f} = -\beta_{2f}e_f \end{cases}$$

where $e_o$ represents a first tracking error of the first second-order extended state observer; $Z_{1o}$ represents a first state variable in the first second-order extended state observer; $Z_{2o}$ represents a second state variable in the first second-order extended state observer; $\beta_{1o}$ represents a first control parameter in the first second-order extended state observer; $\beta_{2o}$ represents a second control parameter in the first second-order extended state observer; and $\bar{a}_{2o}$ represents an estimated value of an equivalent area coefficient of the oxygen regulating valve; and

ef represents a second tracking error of the first second-order extended state observer; $Z_{1f}$ represents a third state variable in the first second-order extended state observer; $Z_{2f}$ represents a fourth state variable in the first second-order extended state observer; $\beta_{1f}$ represents a third control parameter in the first second-order extended state observer; $\beta_{2f}$ represents a fourth control parameter in the first second-order extended state observer; and $\bar{a}_{3f}$ represents an estimated value of an equivalent area coefficient of the fuel regulating valve.

**6.** The method according to claim 5, wherein determining a first instantaneous compensation value and a second instantaneous compensation value of the first second-order extended state observer comprises:

setting the control parameters of the first second-order extended state observer as follows:

$$\begin{cases} \beta_{1o} = 2\omega_o \\ \beta_{2o} = \omega_o{}^2 \end{cases} \qquad \begin{cases} \beta_{1f} = 2\omega_f \\ \beta_{2f} = \omega_f{}^2 \end{cases}$$

wherein $\omega_o$ represents a fifth control parameter in the first second-order extended state observer; and $\omega_f$ represents a sixth control parameter in the first second-order extended state observer; and
setting a characteristic equation of the first second-order extended state observer to be $(s + \omega)^2$ , and designing a required co according to a control loop bandwidth such that $Z_{2o}$ and $Z_{2f}$ converge to all quantities except actuator inputs to obtain the first instantaneous compensation value and the second instantaneous compensation value of the first second-order extended state observer.

**7.** The method according to claim 3, wherein

calculating the oxygen valve compensation value according to the first compensation value and the third compensation value comprises: adding the first compensation value and the third compensation value to obtain the oxygen valve compensation value; and
calculating the fuel valve compensation value according to the second compensation value and the fourth compensation value comprises: adding the second compensation value and the fourth compensation value to obtain the fuel valve compensation value.

**8.** A thrust adjusting apparatus for a liquid-propellant rocket engine, comprising:

a first acquisition module configured to acquire a current operational parameter of a liquid-propellant rocket,

**EP 4 030 047 A1**

wherein the current operational parameter comprises at least a thrust;

a second acquisition module configured to acquire a target operational parameter corresponding to the current operational parameter;

a regulation module configured to obtain an oxygen valve compensation value and a fuel valve compensation value based on the current operational parameter and the target operational parameter, by using active disturbance rejection control technology; and

a compensation module configured to compensate a valve opening of an oxygen regulating valve by using the oxygen valve compensation value, and compensate a valve opening of a fuel regulating valve by using the fuel valve compensation value.

9. An electronic device, comprising:

a memory and a processor communicatively connected to each other, wherein the memory stores computer instructions, which are executed by the processor to execute the thrust adjusting method for a liquid-propellant rocket engine according to any one of claims 1-7.

10. A computer-readable storage medium, which stores computer instructions configured to cause a computer to execute the thrust adjusting method for a liquid-propellant rocket engine according to any one of claims 1-7.

12

S101

Acquiring a current thrust and a target thrust of a liquid-propellant rocket, respectively

S1021

Building a first linearized model using the current thrust and the target thrust

S1022

Constructing a first second-order extended state observer by using the first linearized model, and determining a first instantaneous compensation value and a second instantaneous compensation value of the first second-order extended state observer

S1023

Compensating the first linearized model with the first instantaneous compensation value to obtain a first compensation value, which is the oxygen valve compensation value, and compensating the first linearized model with the second instantaneous compensation value to obtain a second compensation value, which is the fuel valve compensation value

S103

Compensating the valve opening of the oxygen regulating valve by using the oxygen valve compensation value, and compensating the valve opening of the fuel regulating valve by using the fuel valve compensation value

FIG. 1

FIG. 2

S201 — Acquiring a current thrust and a target thrust of a liquid-propellant rocket, respectively

S2021 — Building a first linearized model using the current thrust and the target thrust

S2022 — Constructing a first second-order extended state observer by using the first linearized model, and determining a first instantaneous compensation value and a second instantaneous compensation value of the first second-order extended state observer

S2023 — Compensating the first linearized model with the first instantaneous compensation value to obtain a first compensation value, and compensating the first linearized model with the second instantaneous compensation value to obtain a second compensation value

S203 — Acquiring a current mixing ratio and a target mixing ratio of the liquid-propellant rocket, respectively

S2041 — Building a second linearized model using the current mixing ratio and the target mixing ratio

S2042 — Constructing a second second-order extended state observer by using the second linearized model, and determining a third instantaneous compensation value and a fourth instantaneous compensation value of the second second-order extended state observer

S2043 — Compensating the second linearized model with the third instantaneous compensation value to obtain a third compensation value, and compensating the second linearized model with the fourth instantaneous compensation value to obtain a fourth compensation value

S205 — Adding the first compensation value and the third compensation value to obtain the oxygen valve compensation value; and adding the second compensation value and the fourth compensation value to obtain the fuel valve compensation value

S206 — Compensating a valve opening of an oxygen regulating valve by using the oxygen valve compensation value, and compensating a valve opening of a fuel regulating valve by using the fuel valve compensation value

EP 4 030 047 A1

14

FIG. 3

FIG. 4

Europäisches
Patentamt

European
Patent Office

Office européen
des brevets

# EUROPEAN SEARCH REPORT

Application Number

EP 22 15 1822

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2018/258883 A1 (LE GONIDEC SERGE DANIEL [FR]) 13 September 2018 (2018-09-13) * paragraphs [0003] - [0006], [0011] - [0013] * | 1-10 | INV. F02K9/58 |
| Y | WANG RONGLIN ET AL: "Passivity-based control for rocket launcher position servo system based on improved active disturbance rejection technology", ADVANCES IN MECHANICAL ENGINEERING, [Online] vol. 10, no. 3, 25 March 2018 (2018-03-25), XP055927872, ISSN: 1687-8140, DOI: 10.1177/1687814018766741 Retrieved from the Internet: URL:http://journals.sagepub.com/doi/full-x ml/10.1177/1687814018766741> [retrieved on 2022-06-03] * abstract * | 1-10 | |
| A | WANG XIJIANG ET AL: "Application of Active Disturbance Rejection Control Technology in Missile with Thrust Vector Control", 2019 IEEE 4TH INTERNATIONAL CONFERENCE ON COMPUTER AND COMMUNICATION SYSTEMS (ICCCS), IEEE, 23 February 2019 (2019-02-23), pages 707-711, XP033611587, DOI: 10.1109/CCOMS.2019.8821773 [retrieved on 2019-08-30] * abstract * | 1-10 | TECHNICAL FIELDS SEARCHED (IPC) F02K G05B |
| A | JP H06 280680 A (ISHIKAWAJIMA HARIMA HEAVY IND) 4 October 1994 (1994-10-04) * abstract * | 1-10 | |

The present search report has been drawn up for all claims

| Place of search | Date of completion of the search | Examiner |
|---|---|---|
| The Hague | 3 June 2022 | Angelucci, Stefano |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 15 1822

This annex lists the patent family members relating to the patent documents cited in the above-mentioned European search report.
The members are as contained in the European Patent Office EDP file on
The European Patent Office is in no way liable for these particulars which are merely given for the purpose of information.

03-06-2022

| Patent document cited in search report | Publication date | Patent family member(s) | Publication date |
|---|---|---|---|
| US 2018258883 A1 | 13-09-2018 | CN 108026864 A | 11-05-2018 |
| | | EP 3332108 A1 | 13-06-2018 |
| | | FR 3039859 A1 | 10-02-2017 |
| | | JP 2018526564 A | 13-09-2018 |
| | | RU 2018107852 A | 06-09-2019 |
| | | US 2018258883 A1 | 13-09-2018 |
| | | WO 2017021651 A1 | 09-02-2017 |
| JP H06280680 A | 04-10-1994 | NONE | |

EPO FORM P0459

For more details about this annex : see Official Journal of the European Patent Office, No. 12/82